# EUROPEAN PATENT APPLICATION

(11) **EP 4 117 236 A1**
(43) Date of publication of application: **11.01.2023**
(21) Application number: 21184841.1
(22) Date of filing: 09.07.2021
(51) Int. Cl.: H04L 12/24

(54) **ANOMALY DETECTION ACROSS DOMAINS**

(71) Applicant: Nokia Solutions and Networks Oy, 02610 Espoo (FI)
(72) Inventor: ALI-TOLPPA, Janne, 33960 Pirkkala (FI); SANNECK, Henning, 81549 Munich (DE)
(74) Representative: Nokia EPO representatives

(57) **Abstract**

Various example embodiments relate to anomaly detection across multiple network domains. A first domain may be provided with an indication of anomaly detection context(s) and management features of a second domain. Joint anomaly detection may be performed based on anomaly detection contexts and management features of the first and second domains. Apparatuses, methods, and computer programs are disclosed.

## Description

### TECHNICAL FIELD

Various example embodiments generally relate to communication networks. Some example embodiments relate to anomaly detection across multiple domains.

### BACKGROUND

Communication networks may be configured with a capability to monitor various operational characteristics of the network, for example to detect any anomalous behaviour. A communication network may be further divided into multiple domains, for example to enable separation between an operations technology (OT) domain and a 5^{th} generation system (5GS) domain.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The scope of protection sought for various embodiments of the present disclosure is set out by the independent claims.

Example embodiments of the present disclosure improve anomaly detection and diagnosis in communication networks. This and other benefits may be achieved by the features of the independent claims. Further advantageous implementation forms are provided in the dependent claims, the description, and the drawings.

According to a first aspect, an apparatus may comprise: means for receiving, at a first domain, an indication of at least one anomaly detection context of a second domain; means for receiving management features of the second domain; and means for performing joint anomaly detection for the first domain and the second domain to detect at least one anomaly event, wherein the joint anomaly detection is performed based on at least one anomaly detection context of the first domain, management features of the first domain, the at least one anomaly detection context of the second domain, and the management features of the second domain.

According to an example embodiment of the first aspect, the apparatus may further comprise: means for mapping the anomaly detection contexts of the second domain to the anomaly detection contexts of the first domain; and means for performing the joint anomaly detection based on the mapped anomaly detection contexts of the first domain and the second domain.

According to an example embodiment of the first aspect, the apparatus may further comprise: means for receiving, from the second domain, an indication of the mapping between the at least one anomaly detection context of the first domain and the at least one anomaly detection context of the second domain.

According to an example embodiment of the first aspect, the apparatus may further comprise means for receiving, from the second domain, a discovery request for the at least one anomaly detection context of the first domain; and means for transmitting an indication of the at least one anomaly detection context of the first domain to the second domain, in response to receiving the discovery request.

According to an example embodiment of the first aspect, the apparatus may further comprise: means for obtaining first training data for the management features of the first domain; means for receiving, from the second domain, second training data for the management features of the second domain; and means for jointly profiling the first training data and the second training data to obtain information on normal operating states of the first domain and the second domain.

According to an example embodiment of the first aspect, the apparatus may further comprise: means for receiving an indication of at least one anomaly level associated with the second training data; and means for performing the joint profiling of the first training data and the second training data based on the at least one anomaly level associated with the second training data.

According to an example embodiment of the first aspect, the second training data may comprise at least one of: an identifier of at least one management feature of the second training data, a textual description of the at least one management feature, a value of the at least one management feature, an anomaly level of the at least one management feature, an identifier of an anomaly detection context associated with at least one observation of the at least one management feature, or a time stamp of the at least one observation of the at least one management feature.

According to an example embodiment of the first aspect, the second training data may be received in an anomaly detection profiling data response.

According to an example embodiment of the first aspect, the apparatus may further comprise: means for transmitting a request for the second training data to the second domain.

According to an example embodiment of the first aspect, the second training data may comprise an indication of at least one anomaly detection context for which the second training data is requested, and/or an indication of a time period for which the second training data is requested.

According to an example embodiment of the first aspect, the request for the second training data may comprise an anomaly detection profiling data request.

According to an example embodiment of the first aspect, the apparatus may further comprise means for detecting the at least one anomaly event based on joint profiles determined based on the first training data and the second training data.

According to an example embodiment of the first aspect, the apparatus may further comprise: means for receiving an indication of a current anomaly detection context of the second domain, and/or an indication of at least one anomaly level associated with the management features of the second domain; and means for detecting the at least one anomaly event based on the management features of the second domain, the current anomaly detection context of the second domain, and the at least one anomaly level associated with the management features of the second domain.

According to an example embodiment of the first aspect, the apparatus may further comprise: means for receiving the management features of the second domain, the current anomaly detection context of the second domain, and/or the at least one anomaly level associated with the management features of the second domain within an anomaly detection element stream.

According to an example embodiment of the first aspect, the anomaly detection element stream may be received via an exposure governance management function of the first domain.

According to an example embodiment of the first aspect, the apparatus may further comprise: means for receiving the management features of the second domain, the current anomaly detection context of the second domain, and/or the at least one anomaly level associated with the management features of the second domain within one or more application function event exposure notifications.

According to an example embodiment of the first aspect, the one or more application function event exposure notifications may be received via a network exposure function of the first domain.

According to an example embodiment of the first aspect, the apparatus may further comprise: means for transmitting a subscription request to the anomaly detection element stream or the one or more application function event exposure notifications, wherein the subscription request comprises an identifier of at least one anomaly detection context and/or at least one identifier of at least one management feature associated with the subscription request.

According to an example embodiment of the first aspect, the apparatus may further comprise: means for providing an indication of the at least one anomaly event and/or an indication of a diagnosis for the at least one anomaly event to the second domain.

According to an example embodiment of the first aspect, the apparatus may further comprise at least one of: means for providing, to the second domain, a subset of the management features of the first domain associated with the detection of the at least one anomaly event, means for providing, to the second domain, a subset of the management features of the second domain associated with the detection of the at least one anomaly event, means for providing, to the second domain, a reference to the subset of the management features of the first domain and/or to the subset of the management features of the first domain, or means for providing, to the second domain, an aggregation of the subset of the management features of the first domain and the subset of the management features of the first domain.

According to an example embodiment of the first aspect, the indication of the at least one anomaly event and/or the indication of the diagnosis of the at least one anomaly event may be provided to the second domain via an exposure governance management function of the first domain.

According to an example embodiment of the first aspect, the management features of the first domain and/or the management features of the second domain may comprise at least one key performance indicator or an anomaly level of the at least one key performance indicator.

According to an example embodiment of the first aspect, the first domain may comprise a first network domain.

According to an example embodiment of the first aspect, the first network domain may comprise a wireless network and the second domain may comprise a production system.

According to a second aspect a method may comprise: receiving, at a first domain, an indication of at least one anomaly detection context of a second domain; receiving management features of the second domain; and performing joint anomaly detection for the first domain and the second domain to detect at least one anomaly event, wherein the joint anomaly detection is performed based on at least one anomaly detection context of the first domain, management features of the first domain, the at least one anomaly detection context of the second domain, and the management features of the second domain.

According to an example embodiment of the second aspect, the method may further comprise: mapping the anomaly detection contexts of the second domain to the anomaly detection contexts of the first domain; and performing the joint anomaly detection based on the mapped anomaly detection contexts of the first domain and the second domain.

According to an example embodiment of the second aspect, the method may further comprise: receiving, from the second domain, an indication of the mapping between the at least one anomaly detection context of the first domain and the at least one anomaly detection context of the second domain.

According to an example embodiment of the second aspect, the method may further comprise: receiving, from the second domain, a discovery request for the at least one anomaly detection context of the first domain; and transmitting an indication of the at least one anomaly detection context of the first domain to the second domain, in response to receiving the discovery request.

According to an example embodiment of the second aspect, the method may further comprise: obtaining first training data for the management features of the first domain; receiving, from the second domain, second training data for the management features of the second domain; and jointly profiling the first training data and the second training data to obtain information on normal operating states of the first domain and the second domain.

According to an example embodiment of the second aspect, the method may further comprise: receiving an indication of at least one anomaly level associated with the second training data; and performing the joint profiling of the first training data and the second training data based on the at least one anomaly level associated with the second training data.

According to an example embodiment of the second aspect, the second training data may comprise at least one of: an identifier of at least one management feature of the second training data, a textual description of the at least one management feature, a value of the at least one management feature, an anomaly level of the at least one management feature, an identifier of an anomaly detection context associated with at least one observation of the at least one management feature, or a time stamp of the at least one observation of the at least one management feature.

According to an example embodiment of the second aspect, the second training data may be received in an anomaly detection profiling data response.

According to an example embodiment of the second aspect, the method may further comprise: transmitting a request for the second training data to the second domain.

According to an example embodiment of the second aspect, the second training data may comprise an indication of at least one anomaly detection context for which the second training data is requested, and/or an indication of a time period for which the second training data is requested.

According to an example embodiment of the second aspect, the request for the second training data may comprise an anomaly detection profiling data request.

According to an example embodiment of the second aspect, the method may further comprise: detecting the at least one anomaly event based on joint profiles determined based on the first training data and the second training data.

According to an example embodiment of the second aspect, the method may further comprise: receiving an indication of a current anomaly detection context of the second domain, and/or an indication of at least one anomaly level associated with the management features of the second domain; and detecting the at least one anomaly event based on the management features of the second domain, the current anomaly detection context of the second domain, and the at least one anomaly level associated with the management features of the second domain.

According to an example embodiment of the second aspect, the method may further comprise: receiving the management features of the second domain, the current anomaly detection context of the second domain, and/or the at least one anomaly level associated with the management features of the second domain within an anomaly detection element stream.

According to an example embodiment of the second aspect, the anomaly detection element stream may be received via an exposure governance management function of the first domain.

According to an example embodiment of the second aspect, the method may further comprise: receiving the management features of the second domain, the current anomaly detection context of the second domain, and/or the at least one anomaly level associated with the management features of the second domain within one or more application function event exposure notifications.

According to an example embodiment of the second aspect, the one or more application function event exposure notifications may be received via a network exposure function of the first domain.

According to an example embodiment of the second aspect, the method may further comprise: transmitting a subscription request to the anomaly detection element stream or the one or more application function event exposure notifications, wherein the subscription request comprises an identifier of at least one anomaly detection context and/or at least one identifier of at least one management feature associated with the subscription request.

According to an example embodiment of the second aspect, the method may further comprise: providing an indication of the at least one anomaly event and/or an indication of a diagnosis for the at least one anomaly event to the second domain.

According to an example embodiment of the second aspect, the method may further comprise at least one of: providing, to the second domain, a subset of the management features of the first domain associated with the detection of the at least one anomaly event, providing, to the second domain, a subset of the management features of the second domain associated with the detection of the at least one anomaly event, providing, to the second domain, a reference to the subset of the management features of the first domain and/or to the subset of the management features of the first domain, or providing, to the second domain, an aggregation of the subset of the management features of the first domain and the subset of the management features of the first domain.

According to an example embodiment of the second aspect, the indication of the at least one anomaly event and/or the indication of the diagnosis of the at least one anomaly event may be provided to the second domain via an exposure governance management function of the first domain.

According to an example embodiment of the second aspect, the management features of the first domain and/or the management features of the second domain may comprise at least one key performance indicator or an anomaly level of the at least one key performance indicator.

According to an example embodiment of the second aspect, the first domain may comprise a first network domain.

According to an example embodiment of the second aspect, the first network domain may comprise a wireless network and the second domain may comprise a production system.

According to a third aspect, a computer program may comprise instructions for causing an apparatus to perform at least the following: receiving, at a first domain, an indication of at least one anomaly detection context of a second domain; receiving management features of the second domain; and performing joint anomaly detection for the first domain and the second domain to detect at least one anomaly event, wherein the joint anomaly detection is performed based on at least one anomaly detection context of the first domain, management features of the first domain, the at least one anomaly detection context of the second domain, and the management features of the second domain. The computer program may further comprise instructions for causing the apparatus to perform any example embodiment of the method of the second aspect.

According to a fourth aspect, an apparatus may comprise: at least one processor and at least one memory including computer program code, the at least one memory and the computer code configured to, with the at least one processor, cause the apparatus at least to: receive, at a first domain, an indication of at least one anomaly detection context of a second domain; receive management features of the second domain; and perform joint anomaly detection for the first domain and the second domain to detect at least one anomaly event, wherein the joint anomaly detection is performed based on at least one anomaly detection context of the first domain, management features of the first domain, the at least one anomaly detection context of the second domain, and the management features of the second domain. The at least one memory and the computer code may be further configured to, with the at least one processor, cause the apparatus to perform any example embodiment of the method of the second aspect.

According to a fifth aspect, an apparatus may comprise: means for transmitting, to a first domain, an indication of at least one anomaly detection context of a second domain; means for transmitting, to the first domain, management features of the second domain; and means for receiving an indication of at least one anomaly event detected by the first domain based on at least one anomaly detection context of the first domain, management features of the first domain, the at least one anomaly detection context of the second domain, and the management features of the second domain.

According to an example embodiment of the fifth aspect, the apparatus may further comprise: means for mapping the anomaly detection contexts of the second domain to the anomaly detection contexts of the first domain.

According to an example embodiment of the fifth aspect, the apparatus may further comprise: means for transmitting, to the first domain, an indication of the mapping between the at least one anomaly detection context of the first domain and the at least one anomaly detection context of the second domain.

According to an example embodiment of the fifth aspect, the apparatus may further comprise: means for transmitting, to the first domain, a discovery request for the at least one anomaly detection context of the first domain; means for receiving an indication of the at least one anomaly detection context of the first domain; and means for mapping the anomaly detection contexts of the second domain to the anomaly detection contexts of the first domain based on the an indication of the at least one anomaly detection context of the first domain.

According to an example embodiment of the fifth aspect, the apparatus may further comprise: means for transmitting, to the first domain, training data for the management features of the second domain.

According to an example embodiment of the fifth aspect, the apparatus may further comprise: means for transmitting an indication of at least one anomaly level associated with the training data.

According to an example embodiment of the fifth aspect, the training data may comprise at least one of: an identifier of at least one management feature of the training data, a textual description of the at least one management feature, a value of the at least one management feature, an anomaly level of the at least one management feature, an identifier of an anomaly detection context associated with at least one observation of the at least one management feature, or a time stamp of the observation of the at least one management feature.

According to an example embodiment of the fifth aspect, the training data may be transmitted in an anomaly detection profiling data response.

According to an example embodiment of the fifth aspect, the apparatus may further comprise: means for receiving a request for the training data from the first domain; and means for transmitting the training data in response to receiving the request for the training data.

According to an example embodiment of the fifth aspect, the request for the training data may comprise an indication of at least one anomaly detection context for which the training data is requested, and/or an indication of a time period for which the training data is requested.

According to an example embodiment of the fifth aspect, the request for the training data may comprise an anomaly detection profiling data request.

According to an example embodiment of the fifth aspect, the apparatus may further comprise: means for transmitting an indication of a current anomaly detection context of the second domain, and/or an indication of at least one anomaly level associated with the management features of the second domain.

According to an example embodiment of the fifth aspect, the apparatus may further comprise: means for transmitting the management features of the second domain, the current anomaly detection context of the second domain, and/or the at least one anomaly level associated with the management features of the second domain within an anomaly detection element stream.

According to an example embodiment of the fifth aspect, the anomaly detection element stream may be transmitted to an exposure governance management function of the first domain.

According to an example embodiment of the fifth aspect, the apparatus may further comprise: means for transmitting the management features of the second domain, the current anomaly detection context of the second domain, and/or the at least one anomaly level associated with the management features of the second domain to an application function of the second domain for delivery to the first domain within one or more application function event exposure notifications.

According to an example embodiment of the fifth aspect, the apparatus may further comprise: means for receiving a subscription to the anomaly event detection stream or the one or more application function event exposure notifications, wherein the subscription comprises an identifier of at least one anomaly detection context and/or at least one identifier of at least one management feature associated with the subscription.

According to an example embodiment of the fifth aspect, the apparatus may further comprise: means for receiving an indication of the at least one anomaly event from the first domain.

According to an example embodiment of the fifth aspect, the apparatus may further comprise at least one of: means for receiving, from the first domain, a subset of the management features of the first domain associated with the detection of the at least one anomaly, means for receiving, from the first domain, a subset of the management of the second domain associated with the detection of the at least one anomaly, means for receiving, from the first domain, a reference to the subset of the management features of the first domain and/or to the subset of the management features of the first domain, or means for receiving, from the first domain, an aggregation of the subset of the management features of the first domain and/or the subset of the management features of the first domain.

According to an example embodiment of the fifth aspect, the indication of the at least one anomaly event may be received from an exposure governance management function of the first domain.

According to an example embodiment of the fifth aspect, the apparatus may further comprise: means for causing reconfiguration of the second domain as a corrective action for the at least one anomaly event.

According to an example embodiment of the fifth aspect, the management features of the first domain and/or the management features of the second domain may comprise at least one key performance indicator or an anomaly level of the at least one key performance indicator.

According to an example embodiment of the fifth aspect, the first domain may comprise a first network domain.

According to an example embodiment of the fifth aspect, the first network domain may comprise a wireless network and the second domain may comprise a production system.

According to a sixth aspect, a method may comprise: transmitting, to a first domain, an indication of at least one anomaly detection context of a second domain; transmitting, to the first domain, management features of the second domain; and receiving an indication of at least one anomaly event detected by the first domain based on at least one anomaly detection context of the first domain, management features of the first domain, the at least one anomaly detection context of the second domain, and the management features of the second domain.

According to an example embodiment of the sixth aspect, the method may further comprise: mapping the anomaly detection contexts of the second domain to the anomaly detection contexts of the first domain.

According to an example embodiment of the sixth aspect, the method may further comprise: transmitting, to the first domain, an indication of the mapping between the at least one anomaly detection context of the first domain and the at least one anomaly detection context of the second domain.

According to an example embodiment of the sixth aspect, the method may further comprise: transmitting, to the first domain, a discovery request for the at least one anomaly detection context of the first domain; receiving an indication of the at least one anomaly detection context of the first domain; and mapping the anomaly detection contexts of the second domain to the anomaly detection contexts of the first domain based on the an indication of the at least one anomaly detection context of the first domain.

According to an example embodiment of the sixth aspect, the method may further comprise: transmitting, to the first domain, training data for the management features of the second domain.

According to an example embodiment of the sixth aspect, the method may further comprise: transmitting an indication of at least one anomaly level associated with the training data.

According to an example embodiment of the sixth aspect, the training data may comprise at least one of: an identifier of at least one management feature of the training data, a textual description of the at least one management feature, a value of the at least one management feature, an anomaly level of the at least one management feature, an identifier of an anomaly detection context associated with at least one observation of the at least one management feature, or a time stamp of the observation of the at least one management feature.

According to an example embodiment of the sixth aspect, the training data may be transmitted in an anomaly detection profiling data response.

According to an example embodiment of the sixth aspect, the method may further comprise: receiving a request for the training data from the first domain; and transmitting the training data in response to receiving the request for the training data.

According to an example embodiment of the sixth aspect, the request for the training data may comprise an indication of at least one anomaly detection context for which the training data is requested, and/or an indication of a time period for which the training data is requested.

According to an example embodiment of the sixth aspect, the request for the training data may comprise an anomaly detection profiling data request.

According to an example embodiment of the sixth aspect, the method may further comprise: transmitting an indication of a current anomaly detection context of the second domain, and/or an indication of at least one anomaly level associated with the management features of the second domain.

According to an example embodiment of the sixth aspect, the method may further comprise: transmitting the management features of the second domain, the current anomaly detection context of the second domain, and/or the at least one anomaly level associated with the management features of the second domain within an anomaly detection element stream.

According to an example embodiment of the sixth aspect, the anomaly detection element stream may be transmitted to an exposure governance management function of the first domain.

According to an example embodiment of the sixth aspect, the method may further comprise: transmitting the management features of the second domain, the current anomaly detection context of the second domain, and/or the at least one anomaly level associated with the management features of the second domain to an application function of the second domain for delivery to the first domain within one or more application function event exposure notifications.

According to an example embodiment of the sixth aspect, the method may further comprise: receiving a subscription to the anomaly event detection stream or the one or more application function event exposure notifications, wherein the subscription comprises an identifier of at least one anomaly detection context and/or at least one identifier of at least one management feature associated with the subscription.

According to an example embodiment of the sixth aspect, the method may further comprise: receiving an indication of the at least one anomaly event from the first domain.

According to an example embodiment of the sixth aspect, the method may further comprise at least one of: receiving, from the first domain, a subset of the management features of the first domain associated with the detection of the at least one anomaly; receiving, from the first domain, a subset of the management of the second domain associated with the detection of the at least one anomaly; receiving, from the first domain, a reference to the subset of the management features of the first domain and/or to the subset of the management features of the first domain; or receiving, from the first domain, an aggregation of the subset of the management features of the first domain and/or the subset of the management features of the first domain.

According to an example embodiment of the sixth aspect, the indication of the at least one anomaly event may be received from an exposure governance management function of the first domain.

According to an example embodiment of the sixth aspect, the method may further comprise: causing reconfiguration of the second domain as a corrective action for the at least one anomaly event.

According to an example embodiment of the sixth aspect, the management features of the first domain and/or the management features of the second domain may comprise at least one key performance indicator or an anomaly level of the at least one key performance indicator.

According to an example embodiment of the sixth aspect, the first domain may comprise a first network domain.

According to an example embodiment of the sixth aspect, the first network domain may comprise a wireless network and the second domain may comprise a production system.

According to a seventh aspect, a computer program may comprise instructions for causing an apparatus to perform at least the following: transmitting, to a first domain, an indication of at least one anomaly detection context of a second domain; transmitting, to the first domain, management features of the second domain; and receiving an indication of at least one anomaly event detected by the first domain based on at least one anomaly detection context of the first domain, management features of the first domain, the at least one anomaly detection context of the second domain, and the management features of the second domain. The computer program may further comprise instructions for causing the apparatus to perform any example embodiment of the method of the sixth aspect.

According to an eighth aspect, an apparatus may comprise: at least one processor and at least one memory including computer program code, the at least one memory and the computer code configured to, with the at least one processor, cause the apparatus at least to: transmit, to a first domain, an indication of at least one anomaly detection context of a second domain; transmit, to the first domain, management features of the second domain; and receive an indication of at least one anomaly event detected by the first domain based on at least one anomaly detection context of the first domain, management features of the first domain, the at least one anomaly detection context of the second domain, and the management features of the second domain. The at least one memory and the computer code may be further configured to, with the at least one processor, cause the apparatus to perform any example embodiment of the method of the sixth aspect.

Any example embodiment may be combined with one or more other example embodiments. Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate the example embodiments and together with the description help to understand the example embodiments. In the drawings:
FIG. 1 illustrates an example of a self-healing process for managing a communication network, according to an example embodiment;
FIG. 2 illustrates an example of anomaly event aggregation, according to an example embodiment;
FIG. 3 illustrates an example of an anomaly pattern, according to an example embodiment;
FIG. 4 illustrates an example of an apparatus configured to practice one or more example embodiments;
FIG. 5 illustrates an example of an anomaly detection and diagnosis process across two domains, according to an example embodiment;
FIG. 6 illustrates an example of profiling with inter-domain anomaly exposure, according to an example embodiment;
FIG. 7 illustrates an example of exchange of training data between two domains, according to an example embodiment;
FIG. 8 illustrates an example of anomaly detection with inter-domain anomaly exposure, according to an example embodiment;
FIG. 9 illustrates an example of a subscription based streaming of anomaly data elements between two domains, according to an example embodiment;
FIG. 10 illustrates an example of a subscription based streaming of anomaly data elements between two domains via an application function and a network exposure function, according to an example embodiment;
FIG. 11 illustrates an example of anomaly diagnosis with inter-domain fault exposure, according to an example embodiment;
FIG. 12 illustrates an example of diagnosis exposure over an inter-domain diagnosis interface, according to an example embodiment;
FIG. 13 illustrates an example of a sequence diagram for profiling, anomaly detection, and diagnosis across multiple domains, according to an example embodiment;
FIG. 14 illustrates an example of a method for multi-domain anomaly detection, according to an example embodiment; and
FIG. 15 illustrates an example of a method for enabling multi-domain anomaly detection, according to an example embodiment.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Communication networks may be configured with different domains, for example to enable management of the network in smaller pieces or to provide abstraction of information between the different domains. An example of such arrangement is deployment of 5G non-private networks (NPN) into the operations technology (OT) domain. From the perspective of the OT domain, the 5G NPN wireless network enables to increase OT reconfiguration flexibility by replacing wires by wireless connections. In the OT domain both interconnects of individual devices (e.g. machines) and networks (e.g. machines or production cells containing wired network segments) may be realized using a wireless network. The OT domain may therefore contain OT assets including a wired network (e.g. time sensitive networking, TSN), managed for example by OPC/UA (Object Linking and Embedding for Process Control / Unified Architecture), as well as the cellular network (native 5G or 5G/TSN), which may be managed by its own management system. Co-operation between the different domains may be however exploited to manage the network, for example in connection with anomaly detection and diagnosis.

Anomaly detection may be implemented for example based on neural network(s), which may be trained with a huge amount of training data comprising various types of management information, which may be provided to the neural network(s) as input features. The management information (features) may comprise network management data, or in general domain management data. Domain management data may comprise management data that is not associated with a network part of a domain, for example management data of a production system of a domain. The anomaly detection and/or diagnosis may be performed in any suitable manner and the example embodiments of the present disclosure enable to collect necessary data to consider the states of different domains when performing anomaly detection and/or diagnosis.

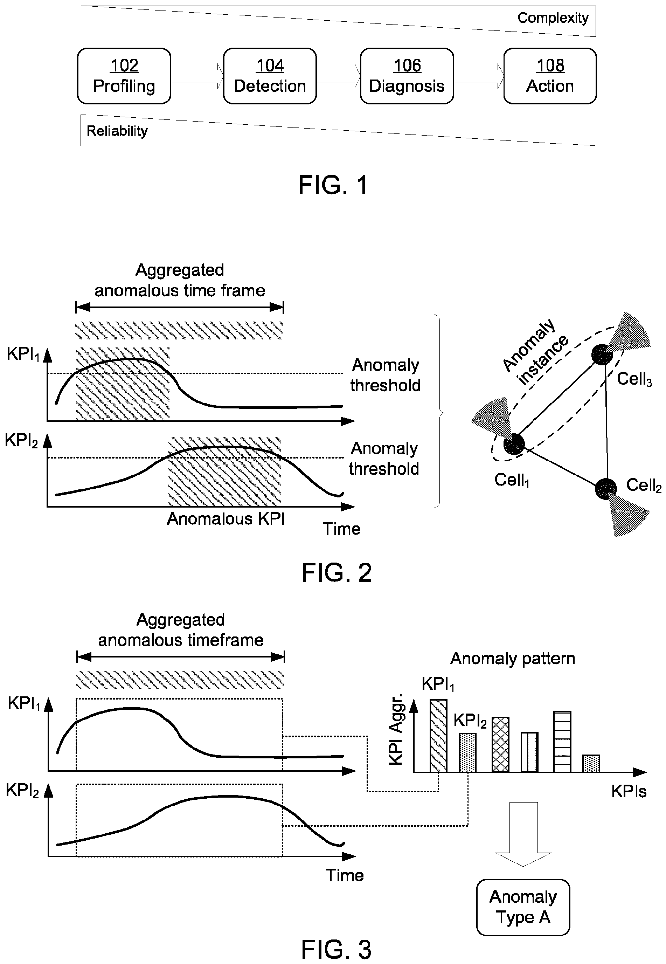

FIG. 1 illustrates an example of a self-healing process for managing a communication network, according to an example embodiment. Self-healing functions may be implemented as a four-step process: profiling (102) the normal states of the system, detecting (104) deviations (anomalies) from the normal states, performing diagnosis (106), and performing corrective actions (108). An advantage of learning the normal behaviour is that any deviations from it, even unforeseen ones, can be detected. On the other hand, not all deviations are degradations and so a diagnosis function may be included to diagnose the detected anomalies and to connect them to possible corrective actions.

The management information used for training an anomaly detection system, for example a neural network or other machine learning model, may not include labelling information, which would indicate which system states are considered normal and which as anomalous. To overcome this, it may be assumed that the network is operating normally most of the time. The choice of features to be profiled for the detection may depend on the kind of anomalies that are possible to detect. Apart from the detection features, additional context information may be provided to suitably localize an anomaly. If this context information is not explicitly included in the training dataset, the training dataset may be split according to different context groups. For example, to profile a normal daily traffic pattern of each mobile network cell, one might choose to profile the traffic for each hour of the day, perhaps separately for working days and weekends, for that given cell.

FIG. 2 illustrates an example of anomaly event aggregation, according to an example embodiment. From the created profiles, an anomaly level may be calculated for the observations of each feature during the anomaly detection (104) phase (inference). The anomaly level may describe the anomalousness of the given feature at a given point in time with a numerical value. Anomalous behaviour may be detected for a single performance indicator, when the anomaly level of that performance indicator reaches or exceeds an anomaly threshold associated with that performance indicator.

However, in general a goal may be to detect distinct anomaly events, which represent the aggregates of anomalous behaviour that share the same root cause. This may be done using anomaly event aggregation. For example, a single root cause, e.g. a single fault, may manifest in several symptoms, affecting several features in one or more managed objects (e.g. cells) and over varying time periods. An example of different dimensions of an anomaly event is illustrated in FIG. 2, where the same root cause is affecting both key performance indicators KPIi and KPI₂, but at subsequent time frames and in both cells Cell₁ and Cell₃ (anomaly instance). The detection process may indicate that an unusual event has occurred, while the anomaly event aggregation process may provide the context and the dimensions of the anomaly, as well as the anomaly levels of the indicator features, in this example KPIi and KPI₂. For example, an aggregated anomalous time frame may be provided as an output of the detection process 104. Then, the diagnosis function 106 may be executed to describe the anomaly in depth, determine the impact it may have on the system, and if necessary, find out its root cause.

FIG. 3 illustrates an example of an anomaly pattern, according to an example embodiment. A first task of the diagnosis function 106 may be the description of the anomaly, which may include generation of an anomaly pattern. The anomaly pattern may aggregate the features, or a subset thereof, for the diagnosis from the anomaly event scope. The anomaly event scope may comprise a combination of a specific part of the network and a time span. The features to be considered may be selected based on the type of anomaly(ies) to be diagnosed. For example, for some feature(s) the temporal context may be relevant for the diagnosis. In this case, the diagnosis function 106 may determine not to aggregate such feature(s) in time for the duration of the event, because this might lead to loss of critical information for the diagnosis. In many cases however, most of the detection features may be included in the considered set of features, since they may provide valuable information also for the diagnosis. In the example of FIG 3, each KPI is aggregated to describe it with a single value. In general, an anomaly pattern may comprise representative values for a plurality of performance indicators. Once the anomaly event is described by the diagnosis function 106, for example by the anomaly pattern, the diagnosis function 106 may find the best matching diagnosis for it, or if a diagnosis can not be found with sufficient confidence, the diagnosis function 106 may escalate the anomaly to a human operator. The diagnosis may be found for example finding a match between the generated anomaly pattern and one of a set of stored anomaly patterns, for example to detect anomaly of Type A, as illustrated in FIG. 3.

A wireless network deployed to an OT scenario may be prone to reliability issues such as shadowing, for example due to a large metal part shielding off the wireless modem of a machine. Therefore fast, high performance fault detection may be desired, for example to address specific OT network characteristics. Network anomaly detection may be exploited for making wireless networks resilient against such unexpected, unforeseen circumstances. However, some network anomaly detection methods may not perform well in industrial campus networks, for example due to the strong dependency of the network states and behaviour to the characteristics of the OT domain. The OT domain characteristics may include both the definition of the contexts for the network anomaly detection as well as the actual detection of the anomalies, both of which may be highly dependent on the OT domain states and behaviour. Therefore, it may not be possible to optimally define the contexts and configured the anomaly detection in advance, which could be done otherwise, for example in case of wide-area CSP (communication service provider) deployments.

On the other hand, sharing data and information between the OT and 5G domains may be challenging, for example due to the complex semantics in the different domains and/or due to confidentiality issues. A challenge is to share enough information between the domains in a way that the information can be used without requiring in-depth knowledge of the semantics and without having to expose anything that would disclose too much domain information considering any confidentiality constraints. It may be therefore desired to improve sharing of information between domains, e.g. OT and 5G domains, in order to enable more efficient and reliable anomaly detection.

According to an example embodiment, a first domain may be provided with an indication of anomaly detection context(s) and management features of a second domain. Joint anomaly detection may be performed based on anomaly detection contexts and management features of the first and second domains. This improves anomaly detection by enabling to consider domain specific issues, such as for example different anomaly detection contexts and levels, and thereby to perform anomaly detection across multiple domains.

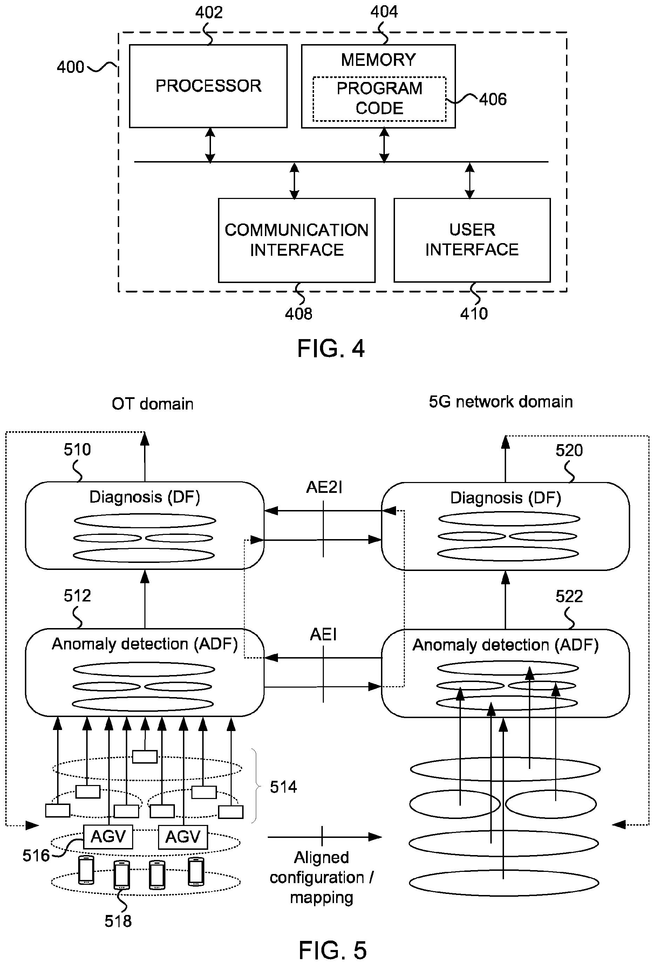

FIG. 4 illustrates an example of an apparatus configured to practice one or more example embodiments. The apparatus 400 may be configured to implement functionality described herein, for example to perform one or more functions of a domain. In general, the apparatus 400 may be configured to perform one or more network functions, for example according to the service-based architecture (SBA) of the 5^{th} generation (5G) 3GPP standards. The apparatus 400 may comprise at least one processor 402. The at least one processor 402 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware (HW) accelerator, a special-purpose computer chip, or the like.

The apparatus 400 may further comprise at least one memory 404. The at least one memory 404 may be configured to store, for example, computer program code or the like, for example operating system software and application software. The at least one memory 404 may comprise one or more volatile memory devices, one or more non-volatile memory devices, and/or a combination thereof. For example, the at least one memory 404 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 400 may further comprise a communication interface 408 configured to enable the apparatus to send and/or receive information, for example the network or domain management related information described herein to/from other network devices, nodes, or functions. For example, the apparatus 400 may use the communication interface 408 to send or receive information over the service-based interface (SBI) message bus of the 5G SBA. The communication interface 408 may be therefore used for internal communications within the apparatus or for external communications with other devices.

The apparatus 400 may further comprise a user interface 410 comprising an input device and/or an output device. The input device may take various forms such a keyboard, a touch screen, or one or more embedded control buttons. The output device may for example comprise a display, a speaker, a vibration motor, or the like. The user interface 410 may be used for example to configure a domain and/or provide information about the domain to a human operator.

When the apparatus 400 is configured to implement some functionality, some component and/or components of the apparatus 400, such as for example the at least one processor 402 and/or the at least one memory 404, may be configured to implement this functionality. Furthermore, when the at least one processor 402 is configured to implement some functionality, this functionality may be implemented using the program code 406 comprised, for example, in the at least one memory 404.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 400 comprises means for performing at least one example embodiment described herein. In one example, the means comprises the at least one processor 402, the at least one memory 404 including program code 406 configured to, when executed by the at least one processor, cause the apparatus 400 to perform the example embodiment(s).

The apparatus 400 may comprise for example a computing device such as for example a server or a network device. Although apparatus 400 is illustrated as a single device it is appreciated that, wherever applicable, functions of the apparatus 400 may be distributed to a plurality of devices, for example to implement example embodiments as a cloud computing service.

FIG. 5 illustrates an example of an anomaly detection and diagnosis process across two domains, according to an example embodiment. Even though the operations are illustrated using the OT and 5G domains as an example, it is appreciated that the example embodiments may be generally applied to any two or more domains. For example, the operations may be reversed such that roles of the OT and 5G domains are switched. The 5G (network) domain is generally provided as an example of a network domain. The OT domain may include also other parts of the production system in addition to the OT network. The OT domain is therefore generally provided as an example of a domain, which may include a network in combination with other functions. Such domain may comprise for example a production system. The 5G network domain may be also referred to as the 5G system (5GS). The OT and 5G domains may comprise respective diagnosis functions (DF), which may be also referred to as OT-DF 510 and 5G-DF 520. The OT and 5G domains may comprise respective anomaly detection functions (ADF), which may be also referred to as OT-ADF 512 and 5G-ADF 522. The OT-ADF 512 may receive management data from a plurality of network devices 514. The management data may comprise data indicative of the operation of the OT domain, for example values of any operational parameters of the OT domain. The OT network may serve one or more devices such as for example autonomous guided vehicles (AGV) 516 or user equipment (UE) 518 (e.g. mobile phones). The OT domain may receive network related data also from the AGVs 516 and/or the UEs 518.

The OT domain may expose anomaly information to the 5G-ADF 522, for example using an anomaly exposure interface (AEI). The AEI may be used for example to provide an indication of anomaly detection context(s) of the OT domain to the 5G network domain. The exposed anomaly information may comprise a definition of anomaly detection contexts relevant in the OT domain. The anomaly detection contexts of the OT domain may be mapped to the anomaly detection contexts of the 5G network domain. The mapping may be done by a human operator or the configuration in the two domains can be aligned using any suitable technical method. This enables the OT domain to define and share the relevant contexts to the 5G network domain. This enables the 5G network domain to take into account the contexts relevant at the OT domain, which the 5G network domain may not be otherwise aware of, like in CSP cases.

In addition to the anomaly detection contexts, data of selected features in the OT domain may be shared over the AEI and used in profiling the combined normal states of both the OT and 5G network domains, for example at the 5G-ADF 522. The 5G network domain may therefore receive management information (features) of the OT domain. This enables the 5G network domain to learn the normal states of the 5G network domain considering also the OT domain. During the anomaly detection phase (inference), the created profiles may be used by the 5G-ADF 522 to detect deviations from the profiled normal states and to aggregate them into discrete events, e.g. anomalies, which may include also the shared features of the OT domain. To enable this, the 5G-ADF 522 may receive a data stream comprising the anomaly features exposed by the OT domain during profile creation. The features may comprise management data, e.g. parameter values and/or measured information, that are provided to an anomaly detection function.

It is noted that the 5G-ADF 522 may simply learn (profile) the normal correlations of the features exposed by the OT domain to its own data and therefore the 5G-ADF 522 does not necessarily need to understand those features and their semantics. The OT domain, for example the OT-ADF 512, may therefore anonymize the features, for example by normalizing them (e.g. as z-scores), in a way that avoids exposing actual values of the features. This enables to avoid any confidentiality issues in sharing the features. In general, the anonymization may comprise mapping the features to another representation of features.

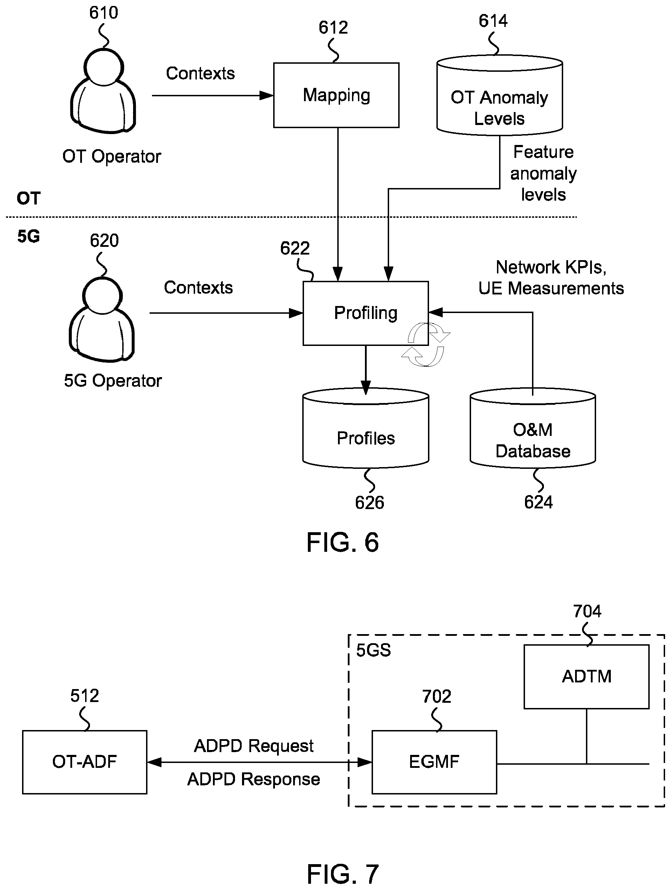

Based on the anomaly detection context(s) of the OT domain, the features of the OT domain, optionally in combination with anomaly detection context(s) of the 5G network domain and features of the 5G network domain, the 5G-ADF 522 may perform (joint) anomaly detection for the OT domain and the 5G network domain. The anomaly detection may result in detection of one or more anomaly events. The anomaly detection may be performed using joint profiles determined based on the training data of the OT domain and training data of the 5G network domain, as will be further described with reference to FIG. 6.

The detected anomaly event(s) may be forwarded to the 5G-DF 520, which may determine their impact and optionally also to diagnose their root cause. The 5G-DF 520 may only understand the anomalous features of its own domain in the detected anomaly event. However, the 5G-DF 520 may expose the anomaly event, optionally also including its diagnosis of the 5G network domain features in the anomaly event, to the OT-DF 510, for example using an anomaly event exposure interface (AE2I). The exposed diagnosis may also include the shared OT domain data, reference to the shared OT domain data, or an aggregation of data that was used to detect the anomaly event. Using the exposed diagnosis and its knowledge of its own domain, the OT-DF 510 may diagnose the OT domain features associated with the detected anomaly event and present the operator a diagnosis of the anomaly for both the OT and 5G domain parts.

As illustrated in FIG. 5, the 5G-ADF 522 may also similarly expose information about detected anomaly events to the ADF 512, which may be analysed at the OT-DF 510. An indication of the diagnosis may be similarly provided by the OT-DF 510 to the 5G-DF 520. Hence, each domain may benefit from the shared contexts and data (features), when analysing anomalous behaviour in the network.

FIG. 6 illustrates an example of profiling with inter-domain anomaly exposure, according to an example embodiment. This example illustrates how 5G profiling for anomaly detection may incorporate OT knowledge. A definition of anomaly detection context(s) may be provided to a mapping function 612, for example by a human operator 610 of the OT domain. The mapping function 612 may map anomaly detection contexts of the OT domain to anomaly detection contexts of the 5G network domain. The mapping may be performed at the OT domain, for example by the OT-ADF 512. The mapping enables to translate the OT domain specific contexts to contexts of the 5G network domain. For example, in industrial campus networks, contexts or context attributes, for which the normal 5G network states and behaviour are profiled, may depend heavily on the production system, e.g., the OT context. The context may be, for example, dependent on the working shift, the product or product variant that is currently produced, the set of machines used, or the like. Another part of the context attributes may come from the 5GS and be associated for example with a cell or a network slice. The OT context attributes may be mapped to corresponding 5G contexts and they may be combined. For example, in case of production shifts, the different production shifts (OT contexts) may be mapped to schedules of the shifts (5G context). The OT domain may transmit an indication of the mapping between the OT and 5G contexts to the 5G network domain. Examples of context exposure and context mapping are provided in Table 1 and Table 2. The tables list the name, type, and description of the parameter. The last column indicates, whether the parameter may be considered as mandatory or optional in a standard, according to one example embodiment.

**Table 1: Context exposure**

| **Parameter** | **Type** | **Description** | **Mandatory/Optional** |
|---|---|---|---|
| Context | Enumeration | List of contexts available in the system | M |

**Table 2: Context mapping**

| **Parameter** | **Type** | **Description** | **Mandatory/Optional** |
|---|---|---|---|
| Source context | Enumeration | Context in source domain | M |
| Target context | Enumeration | Context in target domain | M |

As noted above, the 5G-ADF 522 does not need to understand the semantics of the OT context, but a mapping may be provided to enable the 5G-ADF 522 to combine the OT context(s) to 5G context(s). The selection of relevant contexts (both 5G and OT) may be predetermined or configured during deployment, for example by the human operator(s) 610, 620. The AEI may provide a method for the OT domain to discover the available 5G context(s) and to provide mappings between the OT and 5G context attributes. For example, the OT domain may discover the available 5G contexts by transmitting a discovery request for anomaly detection context(s) to the 5G domain. In response to the discovery request, the 5G network domain may transmit an indication of its anomaly detection context(s) to the OT domain. This discovery response may be received for example by the OT-ADF 512. Based on the discovery response the OT-ADF 512 may map the anomaly detection contexts of the 5G network domain to the anomaly detection contexts of the OT domain. The mapped OT contexts may be then transmitted to the 5G network domain (e.g. 5G-ADF 522). It is however noted that the OT contexts may be alternatively provided to the 5G network domain as such, along with an indication of the mapping, such as for example any information provided in Table 2.

Once the OT and 5G contexts are aligned and available, the 5G network may be trained to learn the normal network states and behaviour in those contexts. This profiling operation may be performed for example based on unsupervised learning. The 5G network domain may obtain its own training data (5G training data) comprising features of the 5G network domain. In addition, using the AEI, selected features from the OT domain may be included in the ADF profiles in the 5G domain. The selection of the relevant features may be done for example by the human operator 610. The selected features may be connected to the corresponding context in the 5G-ADF 522. The selected features may be provided to the 5G domain as OT training data, for example over the AEI. The 5G-ADF 522 may then perform joint profiling based on both the 5G training data and the OT training data. This way the 5G network domain may obtain information on normal operating states of the 5G and OT network domains. As illustrated in FIG. 6, the OT domain may further provide an indication of feature anomaly level(s) of the OT domain to the 5G network domain, for example from an OT anomaly level database 612. The anomaly level(s) may be associated with the OT training data. The 5G-ADF 522 may perform the joint profiling taking into account the anomaly levels associated with the OT training data.

FIG. 7 illustrates an example of exchange of training data between two domains, according to an example embodiment. The 5G network domain (5GS) may comprise an exposure governance management function (EGMF) 702. The 5G network domain (5GS) may further comprise an anomaly detection training manager (ADTM) 704. These network functions may be configured for example according to 3GPP specifications.

The 5G network domain may transmit a request for the OT training data to the OT domain. The AEI may provide an interface, through which the 5G training manager (e.g. ADTM 704) responsible for the anomaly detection profiling may request training data from the OT domain. In this example, the training data is requested by transmitting by an anomaly detection profiling data (ADPD) request, but it is noted that other messages or signals may be used to convey similar information. The ADPD request may be transmitted to the OT-ADF 512. The ADPD request may comprise an indication of anomaly detection context(s) for which the OT training data is requested. The ADPD request may comprise an indication of a time period, e.g. a beginning and an end of the time period, for which the OT training data is requested. An example of information of the ADPD request is provided in Table 3. In general, a request for training data may comprise one or more of the disclosed parameters.

**Table 3: Anomaly detection profiling data request**

| **Parameter** | **Type** | **Description** | **Mandatory/Optional** |
|---|---|---|---|
| Contexts | List of enumeration | List of identifiers of the (shared) context variables that the data is requested for | M |
| Time frame begin | Time stamp | A time stamp indicating the beginning of the time frame the data is requested for | M |
| Time frame end | Time stamp | A time stamp indicating the end of the time frame the data is requested for | M |

In response to the request for OT training data, the OT-ADF 512 may transmit the OT training data to the 5G network domain, for example to the EGMF 702, which may forward the OT training data to the ADTM 704. The OT-ADF 512 may for example respond with an ADPD response comprising the OT training data. The OT training data may comprise at least one of: identifier(s) of feature(s) included in the OT training data, a textual description of the feature(s), a value(s) of the feature(s) (e.g. observations), anomaly level(s) of the feature(s), an identifier of an anomaly detection context associated with observation(s) of the feature(s), or a time stamp of the observation(s) of the feature(s). An example of information of the ADPD response is provided in Tables 4 to 6. In general, a response to the request for training data may comprise one or more of the disclosed parameters.

**Table 4: Anomaly detection profiling data response**

| **Parameter** | **Type** | **Description** | **Mandatory/Optional** |
|---|---|---|---|
| Features | List of feature metadata | See Table 5 | M |
| Data | Handle to a list of anomaly data elements (ADE) | See Table 6 | M |

**Table 5: Feature metadata**

| **Parameter** | **Type** | **Description** | **Mandatory/Optional** |
|---|---|---|---|
| Feature ID | Integer | Unique identifier for referring to the feature | M |
| Feature description | String | Free text description | O |
| Unit | String | Unit of measurement. If omitted, no unit is assumed | O |

**Table 6: Anomaly data element (ADE)**

| **Parameter** | **Type** | **Description** | **Mandatory/Optional** |
|---|---|---|---|
| Context ID | Enumeration | Identifier of the context | M |
| Feature ID | Integer | Unique identifier for referring to the feature | M |
| Time stamp | Time stamp | Time of the observation | M |
| Observation | Float | Value of the observation | M |

The procedure of FIG. 7 may be used for example when the ADTM 704 is deployed in the O&M (operations and maintenance). Deploying the ADTM 704 in the OEM enables to cope with large volumes of data used for offline training of the 5G-ADF 522. The ADPD request and response may be exposed, for example, via the EGMF 702. The ADTM 704 may correlate the received OT training data with the 5G training data and the anomaly detection profiles may learn those correlations. It is noted that to learn the correlations, the 5G-ADF 522 or the ADTM 702 do not need to understand the OT features and any information of their semantics need not be shared via the AEI, which enables to avoid any confidentiality issues. The OT domain may be even configured to anonymize the provided values, e.g. by providing normalized values instead of absolute values, without affecting the training of the anomaly detection at the 5G network domain. The OT features may be normalized for example by using z-scores.

Referring back to FIG. 6, the profiling function 622 may determine the joint profiles for the OT and 5G domains based on the anomaly detection contexts and/or feature anomaly levels received from the OT domain. The profiling function 622 may further use the anomaly detection contexts of the 5G network domain, defined for example by the human operator 620. As noted above, the profiling function 622 may also use 5G training data, which may be obtained for example as network KPIs, UE measurements, or the like, for example from an O&M database 624. The generated (joint) profiles may be stored at the 5G network domain, for example at the profile database 626.

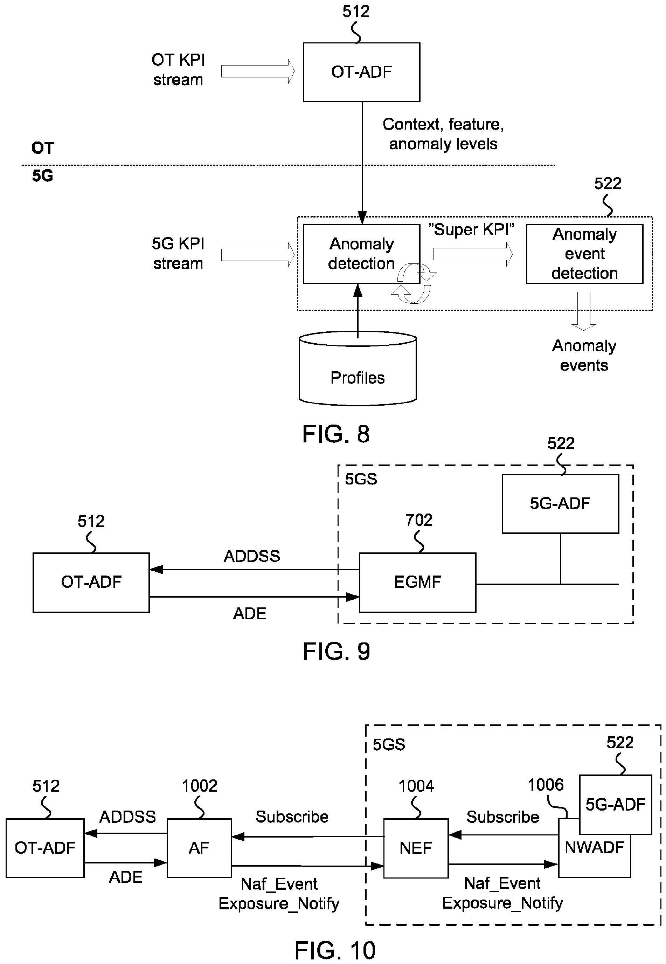

FIG. 8 illustrates an example of anomaly detection with inter-domain anomaly exposure, according to an example embodiment. This example illustrates mutual inter-domain anomaly detection in the inference phase. The OT-ADF 512 may receive management features of the OT domain (OT features), for example within an OT KPI data stream. The OT-ADF 512 may transmit the OT features to the 5G-ADF 522. The OT-ADF 512 may further transmit an indication of a current anomaly detection context of the OT domain to the 5G-ADF 522. The current anomaly detection context may comprise the context of the OT domain when collecting the OT features provided to the 5G-ADF 522. The OT-ADF 512 may further transmit an indication of anomaly level(s) associated with the OT features to the 5G-ADF 522.

The 5G-ADF 522 may for example subscribe to receive a data stream comprising the indication of the OT context(s) and the anomaly level(s) for the selected features from the OT-ADF 512 over the AEI. The 5G-ADF 522, or in general the 5G network domain, may transmit a subscription request to the data stream. The subscription request may comprise identifier(s) of anomaly detection context(s) and/or identifier(s) of OT feature(s) associated with the subscription request.

The 5G-ADF 522 may perform joint anomaly detection for the 5G domain and the OT domain to detect anomaly event(s). The joint anomaly detection may be performed based on anomaly detection context(s) of the 5G domain, management features of the 5G domain, anomaly detection context(s) of the OT domain, and management features of the OT domain. The joint anomaly detection may be further performed based on the mapped anomaly detection contexts of the 5G domain and the OT domain (cf. operation 612). Hence, the context(s) used may comprise a mapped combination of the contexts in the 5G and OT domains. For example, the 5G-ADF 522 may correlate the OT features with the 5GS data and run anomaly detection and anomaly event detection algorithms with the combined data. This enables the detection of anomaly events taking into account both the 5GS data and the shared OT features. The 5G-ADF 522 may therefore advantageously detect anomaly event(s) based on the OT features, the current anomaly detection context of the OT domain, and anomaly level(s) associated with the OT features. Depending on the type of anomalies that are to be detected, the 5G-ADF 522 may be deployed for example in the OEM or in the core network. Examples of such deployments are illustrated in FIG. 9 and FIG. 10.

FIG. 9 illustrates an example of a subscription based streaming of anomaly data elements between two domains, according to an example embodiment. The 5G-ADF 522 may receive the OT features, the current anomaly detection context of the OT domain, and/or the anomaly level(s) associated with the OT features within an anomaly detection element (ADE) stream. The 5G-ADF 522 may receive the ADE stream via the EGMF 702. The 5G-ADF 522 may send the subscription request, for example an anomaly detection data stream subscription (ADDSS), to the OT-ADF 512. The subscription may be exposed via the EGMF 702. Based on the ADDSS, the OT-ADF 512 may provide a stream of anomaly data elements (ADE), cf. Table 6, via the EGMF 702 to the 5G-ADF 522. This approach may be applied when the 5G-ADF 522 is deployed in the OAM for performing inference to detect anomalies. Table 7 illustrates an example of the information provided within the subscription request. In general, the subscription request may comprise at least one or more of the disclosed parameters.

**Table 7: Anomaly detection data stream subscription**

| **Parameter** | **Type** | **Description** | **Mandatory/Optional** |
|---|---|---|---|
| Contexts | Enumeration | List of identifiers of the (shared) variables that the data is requested for | M |
| Features | List of integers | List of IDs of the exposed features that the ADF had been profiled with | M |

FIG. 10 illustrates an example of a subscription based streaming of anomaly data elements between two domains via an application function and a network exposure function, according to an example embodiment. The 5G-ADF 522 may be deployed at the core network, for example in the network data analytics function 1006 (NWDAF). The OT-ADF 512 may be modelled as an application function (AF) and the communication between the 5G-ADF 522 may be routed via the network exposure function (NEF) 1004. The 5G-ADF 522 may for example receive the OT features, the current anomaly detection context of the OT domain, and/or the anomaly level(s) associated with the OT features within one or more AF event exposure notifications (Naf_Event_Exposure_Notify). The 5G-ADF 522 may receive the AF event exposure notification(s) via the NEF 1004. The 5G-ADF 522 may send the subscription request to NEF 1004, which may forward the subscription to the AF 1002 for delivery to the OT-ADF 512. The AF 1002 may provide the subscription to the OT-ADF 512 as an ADDSS, as described above. Based on the subscription, the OT-ADF 512 may provide an ADE stream to the AF 1002, which may forward the ADE stream to 5G network domain, for example as the AF event exposure notification(s). This approach may be applied when the 5G-ADF 522 is deployed in the core network for performing inference to detect anomalies.

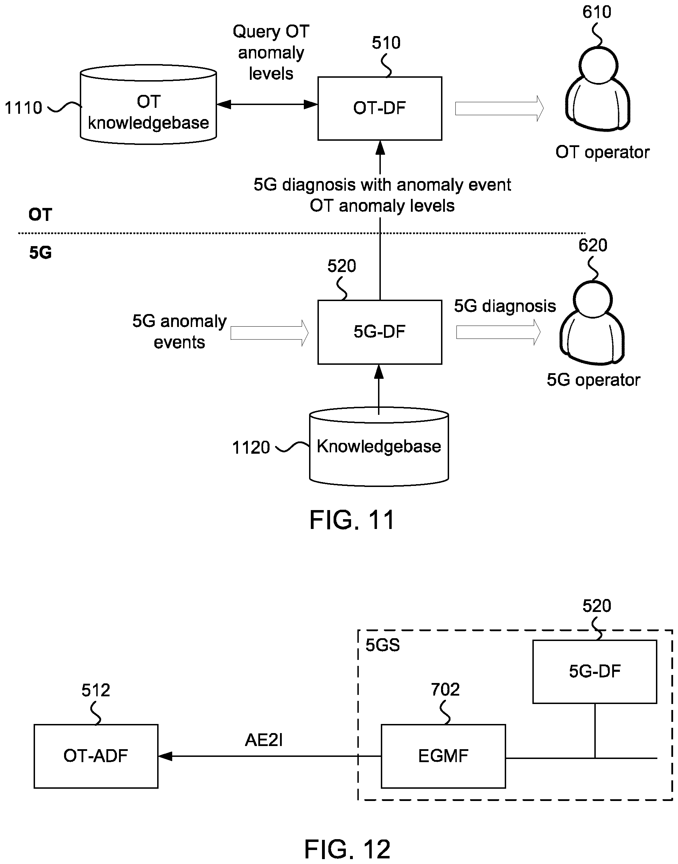

FIG. 11 illustrates an example of anomaly diagnosis with inter-domain fault exposure, according to an example embodiment. The 5G-ADF 522 may provide the detected anomaly event(s) to the 5G-DF 520. The 5G-DF 520 may determine the impact and possible root cause for the detected anomaly event(s). As described with reference to FIG. 3, 5G-DF 520 may create anomaly pattern(s), which describe the (or each) anomaly event. The 5G-DF 520 may then compare the created anomaly pattern(s) against anomaly patterns stored in its diagnosis knowledgebase 1120, the find the most similar match(es). The 5G-DF 520 may provide an indication of the anomaly event(s) and/or a diagnosis for the anomaly event(s) to the OT domain, for example the OT-DF 510. The indication of the anomaly event and/or the diagnosis may be provided over the AE2I interface.

Different example embodiments for sharing of anomaly events and/or diagnosed over the AE2I are provided below:
1) The 5G-DF 520 may have knowledge of the 5GS features included in the anomaly pattern but not have knowledge of the OT features. In this case, the 5G-DF 520 may match the 5GS features against its own knowledgebase 1120. The diagnosed anomaly pattern may include an analysis of the 5G features and the raw OT data included in the anomaly event. The 5G-DF 520 may therefore provide to the OT-DF 510 an indication of the diagnosis determined based on the 5G features and the OT features associated with the detected anomaly event(s).
2) A common DF may be provided at the 5G network domain for 5G and OT. In this case, the diagnosis knowledgebase 1120 may include knowledge of both the 5G and the OT features. This enables the 5G-DF 520 to determine diagnoses based on both the 5G and the OT features. The 5G-DF 520 may therefore provide to the OT-DF 510 an indication of the diagnosis determined based on both the 5G and the OT features.
3) The 5G-DF 520 may alternatively forward an indication of the anomaly event(s) without diagnosis of the 5G (or OT) features to the OT-DF 510. This approach may be used for example when there is no DF in the 5GS.

The OT domain may be informed about the 5G and/or OT features associated with the detected anomaly event(s) is various ways. The 5G network domain, for example the 5G-DF 520, may provide (e.g. transmit) a subset of the 5G features to the OT domain, for example to the OT-DF 510. The subset of 5G features may comprise the 5G features that are associated with the detected anomaly event(s), for example features used for detecting the anomaly event(s). Similarly, a subset of OT features associated with the detected anomaly event(s) may be provided to the OT domain. The subset(s) of the 5G and/or OT features may be indicated to the OT domain for example by transmitting a reference (e.g. link) to the subset of the 5G and/or OT features. Alternatively, or additionally, an aggregation of the subsets of the 5G and OT features may be provided to the OT domain. The OT-DF 510 may query OT anomaly level(s) form an OT knowledgebase 1110 and perform diagnosis of the OT features accordingly. An indication of the OT diagnosis may be provided to the human operator 610 of the OT domain. The 5G-DF 520 may also provide an indication of the 5G diagnosis to the human operator 620 of the 5G network domain.

FIG. 12 illustrates an example of diagnosis exposure over an inter-domain diagnosis interface, according to an example embodiment. The 5G-DF 520 may expose its diagnosis to the OT-DF 510 via the AE2I, which may be also referred to as a diagnosis exposure interface. The exposed diagnosis may include diagnosis of the impact of the detected anomaly event(s) in the 5G network domain and also the data or the scope in OT features, which are included in the diagnosed anomaly event. The 5G-DF 520 may provide the indication of the detected anomaly event(s) and/or an indication of the diagnosis of the detected anomaly event(s) to the OT domain via the EGMF 702. The 5G-DF 520 may also use the EGMF 702 to inform the OT-DF 510 about the subset(s) of the 5G and/or OT features associated with the detected anomaly event(s), for example by any of the methods described above. The 5G-DF 520 may also transmit, to the OT domain (e.g. OT-DF 510), information about the OT anomaly levels, for example the OT anomaly levels used for detecting the anomaly event(s). Based on the received information, the OT-DF 510 may diagnose the OT features in the anomaly event. Hence, joint anomaly detection may be followed by OT specific diagnosis at the OT domain.

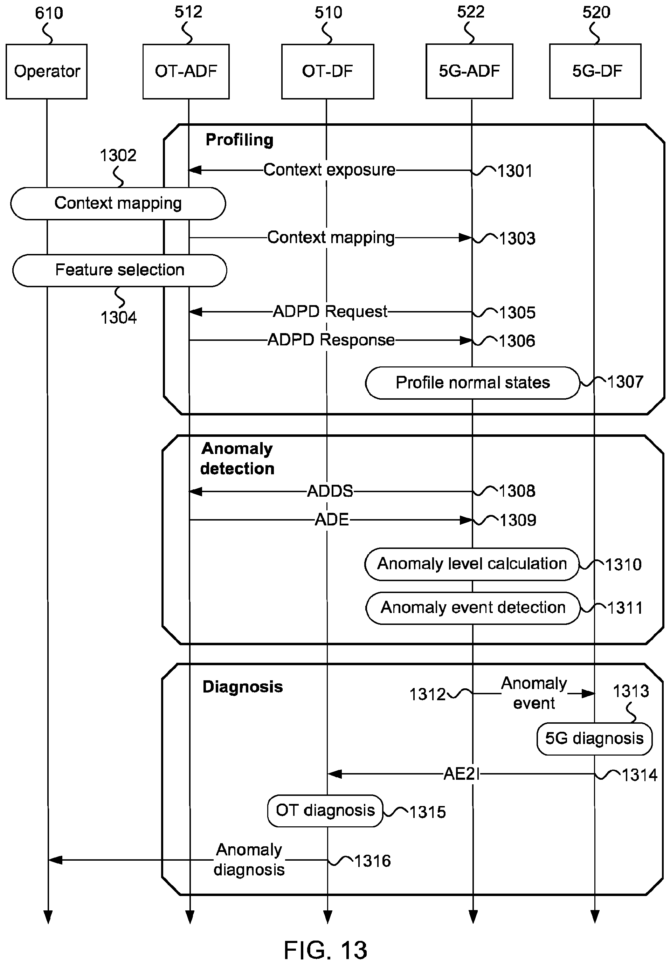

FIG. 13 illustrates an example of a sequence diagram for profiling, anomaly detection, and diagnosis across multiple domains, according to an example embodiment. This sequence diagram combines the profiling, anomaly detection, and diagnosis operations described above with reference to FIG. 6, FIG. 8, and FIG. 11.

At operation 1301, the 5G-ADF 522 may expose a list of 5G anomaly detection contexts to the OT-ADF 512. This operation may be referred to as context exposure. This operation may initiate the profiling (training) phase.

At operation 1302, OT-ADF 512 may determine, optionally based on user input received from the human operator 610, a mapping between the anomaly detection contexts of the 5G and OT domains.

At operation 1303, the OT-ADF 512 may return the context mapping to the 5G-ADF 522.

At operation 1304, the OT-ADF 512 may select, optionally based on user input received from the human operator 610, a set of features to be considered in the mutual anomaly detection. The OT-ADF 512 may further select the anomaly detection contexts of the OT domain for the mutual anomaly detection and find their mapping to 5G contexts.

At operation 1305, the 5G-ADF 522, or alternatively its training manager (ATDM), may request training data for profiling the normal system states, for example with an ADPD request.

At operation 1306, the OT-ADF 512 may return the requested training data, or a handle to it, for the selected features and the associated contexts to the 5G- ADF 522, for example in an ADPD response.

At operation 1307, using the training data provided or indicated at operation 1306, the 5G-ADF 522 may profile the normal network states combined with the provided OT features. This operation may end the profiling phase

At operation 1308, the 5G-ADF 522 may send a subscription to the OT-ADF 512 to subscribe to an online feed of OT anomaly detection features used in the profiling. The subscription may comprise an anomaly detection data subscription (ADDS). This operation may initiate the anomaly detection (inference) phase.

At operation 1309, the OT-ADF 512 may provide the anomaly data, e.g. features, context(s), and/or anomaly level(s), to the 5G-ADF 522, for example as a stream of anomaly detection elements (ADE).

At operation 1310, the 5G-ADF 522 may combine the 5G and OT data (features). Based on the combined 5G and OT data, the 5G-ADF 522 may calculate the feature anomaly level(s).

At operation 1311, the 5G-ADF 522 may detect discrete anomaly event(s) based on the anomaly level(s) calculated at operation 1310. This operation may end the anomaly detection phase.

At operation 1312, the 5G-ADF 522 may forward the anomaly event(s) detected at operation 1311 to the 5G-DF 520.

At operation 1313, the 5G-DF 520 may perform anomaly diagnosis based on the detected event(s). The 5G-DF 520 may for example create an anomaly pattern of the 5GS features in the anomaly event(s), compare the anomaly pattern against anomaly patterns stored in its diagnosis knowledgebase and select the most similar diagnosis.

At operation 1314, the 5G-DF 520 may provide the anomaly event(s) to the OT-DF 510 via the AE2I with its diagnosis of the 5G features in the event and the OT feature data associated with the event(s), or a reference to the OT feature data.

At operation 1315, OT-DF 510 may perform diagnosis of the OT features in the anomaly event(s).

At operation 1316, the OT-DF 510 may forward the diagnosed anomaly event, comprising diagnoses from both the 5G and the OT domains to the human operator 610.

Example embodiments of the present disclosure therefore enable network anomaly detection across multiple domains. The example embodiments may be applied for example in industrial campus networks, where the required contexts may be highly dependent on the OT domain and can not be designed a priori. Furthermore, the example embodiments enable detection of anomalies with correlated data from both the 5G and the OT domains, thereby improving the anomaly detection and reducing the rate of false positives.

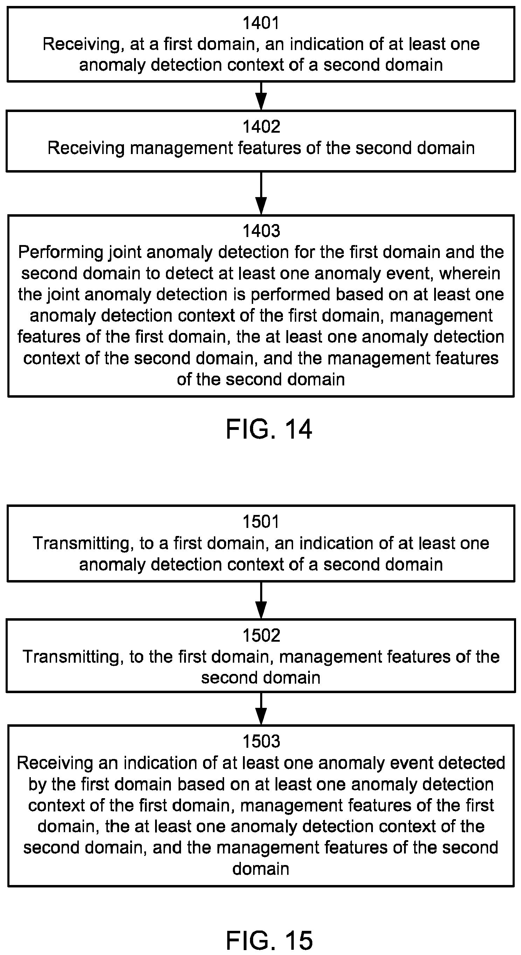

FIG. 14 illustrates an example of a method for multi-domain anomaly detection, according to an example embodiment.

At 141, the method may comprise receiving, at a first domain, an indication of at least one anomaly detection context of a second domain.

At 1402, the method may comprise receiving management features of the second domain.

At 1403, the method may comprise performing joint anomaly detection for the first domain and the second domain to detect at least one anomaly event, wherein the joint anomaly detection is performed based on at least one anomaly detection context of the first domain, management features of the first domain, the at least one anomaly detection context of the second domain, and the management features of the second domain.

FIG. 15 illustrates an example of a method for enabling multi-domain anomaly detection, according to an example embodiment.

At 1501, the method may comprise transmitting, to a first domain, an indication of at least one anomaly detection context of a second domain.

At 1502, the method may comprise transmitting, to the first domain, management features of the second domain.

At 1503, the method may comprise receiving an indication of at least one anomaly event detected by the first domain based on at least one anomaly detection context of the first domain, management features of the first domain, the at least one anomaly detection context of the second domain, and the management features of the second domain.

Further features of the methods directly result for example from the functionalities and parameters of the apparatus 400, the various network functions described herein, for example OT-ADF 512, 5G-ADF 522, OT-DF 510, and 5G-DF 520, as described in the appended claims and throughout the specification, and are therefore not repeated here. Different variations of the methods may be also applied, as described in connection with the various example embodiments.

An apparatus, for example a network device or a network node, may be configured to perform or cause performance of any aspect of the methods described herein. Further, a computer program may comprise instructions for causing, when executed, an apparatus to perform any aspect of the methods described herein. Further, an apparatus may comprise means for performing any aspect of the method(s) described herein. According to an example embodiment, the means comprises at least one processor, and at least one memory including program code, the at least one processor, and program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising:
means for receiving, at a first domain, an indication of at least one anomaly detection context of a second domain;
means for receiving management features of the second domain; and
means for performing joint anomaly detection for the first domain and the second domain to detect at least one anomaly event, wherein the joint anomaly detection is performed based on at least one anomaly detection context of the first domain, management features of the first domain, the at least one anomaly detection context of the second domain, and the management features of the second domain.

2. The apparatus according to claim 1, further comprising:
means for mapping the anomaly detection contexts of the second domain to the anomaly detection contexts of the first domain; and
means for performing the joint anomaly detection based on the mapped anomaly detection contexts of the first domain and the second domain.

3. The apparatus according to claim 2, further comprising;
means for receiving, from the second domain, an indication of the mapping between the at least one anomaly detection context of the first domain and the at least one anomaly detection context of the second domain.

4. The apparatus according to claim 3, further comprising:
means for receiving, from the second domain, a discovery request for the at least one anomaly detection context of the first domain; and
means for transmitting an indication of the at least one anomaly detection context of the first domain to the second domain, in response to receiving the discovery request.

5. The apparatus according to any preceding claim, further comprising:
means for obtaining first training data for the management features of the first domain;
means for receiving, from the second domain, second training data for the management features of the second domain; and
means for jointly profiling the first training data and the second training data to obtain information on normal operating states of the first domain and the second domain.

6. The apparatus according to claim 5, further comprising:
means for receiving an indication of at least one anomaly level associated with the second training data; and
means for performing the joint profiling of the first training data and the second training data based on the at least one anomaly level associated with the second training data.

7. The apparatus according to claim 6, wherein the second training data comprises at least one of:
an identifier of at least one management feature of the second training data,
a textual description of the at least one management feature,
a value of the at least one management feature,
an anomaly level of the at least one management feature,
an identifier of an anomaly detection context associated with at least one observation of the at least one management feature, or
a time stamp of the at least one observation of the at least one management feature.

8. An apparatus, comprising:
means for transmitting, to a first domain, an indication of at least one anomaly detection context of a second domain;
means for transmitting, to the first domain, management features of the second domain; and
means for receiving an indication of at least one anomaly event detected by the first domain based on at least one anomaly detection context of the first domain, management features of the first domain, the at least one anomaly detection context of the second domain, and the management features of the second domain.

9. The apparatus according to claim 8, further comprising:
means for mapping the anomaly detection contexts of the second domain to the anomaly detection contexts of the first domain.

10. The apparatus according to claim 9, further comprising;
means for transmitting, to the first domain, an indication of the mapping between the at least one anomaly detection context of the first domain and the at least one anomaly detection context of the second domain.

11. The apparatus according to claim 10, further comprising:
means for transmitting, to the first domain, a discovery request for the at least one anomaly detection context of the first domain;
means for receiving an indication of the at least one anomaly detection context of the first domain; and
means for mapping the anomaly detection contexts of the second domain to the anomaly detection contexts of the first domain based on the an indication of the at least one anomaly detection context of the first domain.

12. The apparatus according to any of claims 8 to 11, further comprising:
means for transmitting, to the first domain, training data for the management features of the second domain.

13. The apparatus according to claim 12, further comprising:
means for transmitting an indication of at least one anomaly level associated with the training data.

14. A method comprising:
receiving, at a first domain, an indication of at least one anomaly detection context of a second domain;
receiving management features of the second domain; and
performing joint anomaly detection for the first domain and the second domain to detect at least one anomaly event, wherein the joint anomaly detection is performed based on at least one anomaly detection context of the first domain, management features of the first domain, the at least one anomaly detection context of the second domain, and the management features of the second domain.

15. A method comprising
transmitting, to a first domain, an indication of at least one anomaly detection context of a second domain;
transmitting, to the first domain, management features of the second domain; and
receiving an indication of at least one anomaly event detected by the first domain based on at least one anomaly detection context of the first domain, management features of the first domain, the at least one anomaly detection context of the second domain, and the management features of the second domain.
